# EUROPEAN PATENT SPECIFICATION

(11) **EP 3 064 770 B1**
(45) Date of publication and mention of the grant of the patent: **13.03.2019**
(21) Application number: 15196834.4
(22) Date of filing: 27.11.2015
(51) Int. Cl.: F03D 7/04

(54) **WIND TURBINE POWER GENERATION FACILITY AND METHOD OF CONTROLLING THE SAME**
WINDTURBINENSTROMERZEUGUNGSANLAGE UND VERFAHREN ZUR STEUERUNG DAVON
INSTALLATION DE GÉNÉRATION DE PUISSANCE DE TURBINE ÉOLIENNE ET SON PROCÉDÉ DE COMMANDE

(30) Priority: 04.03.2015 JP 2015042148
(43) Date of publication of application: 07.09.2016
(73) Proprietor: MITSUBISHI HEAVY INDUSTRIES, LTD., Tokyo 108-8215 (JP)
(72) Inventor: ARIKI, Wakako, TOKYO, 108-8215 (JP); HAYASHI, Yoshiyuki, TOKYO, 108-8215 (JP)
(74) Representative: Intès, Didier Gérard André

(56) References cited:
- EP-A2- 2 693 049
- EP-A2- 2 746 575
- WO-A1-2015/048972
- US-A1- 2010 014 969
- US-A1- 2012 051 907
- US-A1- 2012 134 807

## Description

### TECHNICAL FIELD

The present disclosure relates to a wind turbine power generation facility and a method of controlling the same.

### BACKGROUND ART

In a wind turbine power generation facility, it is widely known to control the rotation speed of a rotor by adjusting the pitch angles of wind turbine blades.

For instance, Patent Document 1 discloses a wind turbine generator which obtains characteristics of pitch angles with respect to the rotation speed of a wind turbine rotor whereby it is possible to achieve the maximum output determined by the shape of the wind turbine, and controls the pitch angles of the wind turbine on the basis of the characteristics. Furthermore EP2746575 (A2) discloses a control system and method for mitigating loads during yaw error on a wind turbine.
From US2012134807 (A1) a method for preventing a possible overspeed of a wind turbine rotor is known.

### Citation List

### Patent Literature

Patent Document 1: JP2003-239843A

### SUMMARY

In a wind turbine power generation facility in which the yaw angle is controlled in accordance with the orientation of the nacelle, which is the orientation of the rotational plane of the wind turbine rotor, when the wind direction changes rapidly, yaw following may take some time and the angle between the wind direction and the orientation of the nacelle (wind-direction difference) may increase.

At this time, the wind-velocity component from the front of the rotor becomes smaller than the actual wind velocity. Thus, in a wind turbine power generation facility in which the rotation speed is controlled on the basis of the pitch angle as described above, the pitch angles of the wind turbine blades may be controlled toward the fine side to maintain the rotation speed of the rotor, and may be kept in the vicinity of the full-fine pitch angle. In this case, an excessive load may be applied to the wind turbine blades depending on the wind direction. As a result, there is a possibility that the blades get damaged or the blades contact the tower depending on the position of the blades.

In view of the above issues, an object of at least one embodiment of the present invention is to provide a wind turbine power generation facility whereby it is possible to avoid an excessive load applied to blades due to a change in wind direction.
The present invention relates to a wind turbine power generation facility according to claim 1 and a method of controlling a wind turbine power generation facility according to claim 12.
(1) A wind turbine power generation facility according to at least one embodiment of the present invention includes: a rotor including a wind turbine blade; a nacelle for rotatably supporting the rotor; a yaw driving part configured to rotate the nacelle; a pitch driving part configured to change a pitch angle of the wind turbine blade; and a controller configured to provide the pitch driving part with a pitch-angle command value to control the pitch driving part. The controller includes: a demand-value calculation part configured to calculate a pitch-angle demand value on the basis of at least a rotation speed of the rotor; a limit-value setting part for setting a pitch angle between a full fine pitch angle and a full feather pitch angle as a limit value, if at least an angle between a wind direction and an orientation of the nacelle is not less than a threshold value A₁ (where A₁ > 0); and a command-value calculation part configured to set the limit value as the pitch-angle command value if the pitch-angle demand value is a value closer to the full fine pitch angle than the limit value is, and to set the pitch-angle demand value as the pitch-angle command value if the pitch-angle demand value is a value equal to the limit value or closer to the full feather pitch angle than the limit value is.
   When the wind-direction difference is larger than a predetermined value, the wind-velocity component from the front of the rotor is smaller than the wind velocity actually acting on the wind turbine blade, and thus the pitch-angle demand value becomes a value close to the full fine pitch angle in order to maintain the rotation speed of the rotor, which generates an excessive load applied to the blade.
   In this regard, with the above configuration (1), if the angle between the wind direction and the orientation of the nacelle (wind-direction difference) is greater than the predetermined value, the limit value of the pitch angle is set to a value closer to the feather side from the full fine pitch angle, and a limitation by the limit value is imposed on the pitch-angle demand value calculated on the basis of the rotation speed of the rotor. In this way, even if the wind-direction difference is greater than the predetermined value it is possible to prevent the pitch angle of the wind turbine blade from being maintained to be in the vicinity of the full fine pitch angle, and to avoid an excessive load applied to the blades due to a change in the wind direction.
   Meanwhile, even if the limit value of the pitch angle as described in the above (1) is not provided, in some cases it is possible to reduce the load applied to the wind turbine blade by shutting down the wind turbine power generation facility and changing the pitch angle of the wind turbine blade to the full feather pitch angle. However, in such case, during the shutdown, a large load difference is generated between the plurality of wind turbine blades while the pitch angle of the wind turbine blade shifts to the full feather pitch angle, which may generate a large load at the tower top. In this regard, with the above configuration (1), it is possible to avoid an excessive load being applied to the blades without shutting down the wind turbine power generation facility, which makes it possible to avoid an excessive load being applied to the tower top as well as to the blade.
   In the above configuration (1), the limit-value setting part is configured to determine the limit value on the basis of the angle between the wind direction and the orientation of the nacelle.
   With the above configuration (2), it is possible to set an appropriate limit value of the pitch angle in accordance with the wind-direction difference.
(3) In some embodiments, in the above configuration (1) or (2), the limit-value setting part is configured to set, as the limit value, a sum of: a base limit value which is set regardless of a magnitude relationship between the threshold value A₁ and the angle between the wind direction and the orientation of the nacelle; and a limit correction amount which is determined on the basis of the angle between the wind direction and the orientation of the nacelle if the angle is not less than the threshold value A₁ (where A₁ > 0).
   There is a typical wind turbine power generation facility which adopts a logic in which a limit of the pitch angle not depending on the wind-direction difference is set. With the above configuration (3), when the wind-direction difference is greater than a predetermined value, a sum of a base limit value set regardless of the wind-direction difference and a limit correction amount determined on the bases of the wind-direction difference is set as a limit value of the pitch angle. Thus, it is possible to configure the controller described in the above (1) or (2) by applying simple correction to a typical logic of a wind turbine power generation facility.
(4) In the above configuration (1), the limit-value setting part is configured to, if the angle between the wind direction and the orientation of the nacelle is not less than a threshold value A₂ which is larger than the threshold value A₁, set the limit value closer to a feather side than a value at the time when the angle is at the threshold value A₁.
   The greater the wind-direction difference is, the smaller the front component of the wind velocity becomes as compared to the actual wind velocity. Thus, the pitch-angle demand value by the control of the rotation speed becomes a value closer to the fine side, and a load acting on the blade tends to become larger.
   In this regard, with the above configuration (4), the limit value of the pitch angle is set closer to the feather side when the wind-direction difference is not less than the threshold value A₂ which is greater than the threshold value A₁ than when the wind-direction difference is A₁, so as to further reduce the load acting on the blade, which makes it possible to avoid an excessive load applied to the blade caused by a change in the wind direction appropriately.
(5) In some embodiments, in the above configuration (4), the limit-value setting part is configured to, if the angle between the wind direction and the orientation of the nacelle is from the threshold value A₁ to the threshold value A₂, set the limit value closer to the feather side with an increase in the angle.
   With the above configuration (5), in a range where the wind-direction difference is from A₁ to A₂, the limit value is set closer to the feather side with an increase in the wind-direction difference, which makes it possible to appropriately avoid an excessive load applied to the blades due to a change in the wind direction.
(6) In some embodiments, in the above configuration (5), the limit-value setting part is configured to increase the limit value in proportion to the angle between the wind direction and the orientation of the nacelle when the angle is within a range of from the threshold value A₁ to the threshold value A₂.
(7) In some embodiments, in any one of the above configurations (1) to (6), the limit-value setting part is configured to determine the limit value on the basis of wind velocity.
   As described above, if the wind-direction difference is not less than a predetermined value, the wind-velocity component at the front of the rotor is small, and thus the pitch-angle demand value is fixed to the fine side trying to maintain the rotation speed of the rotor, which causes the load applied to the blade to tend to increase. At this time, the greater the wind velocity acting on the wind turbine blade is, the more remarkable the tendency of the increase in the load due to the pitch-angle demand value being fixed to the fine side is.
   In this regard, with the above configuration (7), determining the limit value on the basis of the wind velocity makes it possible to reduce the load on the blade effectively.
(8) In some embodiments, in the above configuration (7), the limit-value setting part is configured to, if the wind velocity is not less than a threshold value U₂ which is greater than a threshold value U₁, set the limit value closer to the feather side than a value at the time when the wind velocity is at the threshold value U₁.
   As described above, when the wind-direction difference is not less than a predetermined value, the greater the wind velocity acting on the wind turbine blade is, the more remarkable the tendency of the increase in the load due to the pitch-angle demand value being fixed to the fine side is.
   In this regard, with the above configuration (8), the limit value of the pitch angle is set closer to the feather side when the wind-velocity is not less than the threshold value U₂ which is greater than the threshold value U₁ than when the wind-direction difference is U₁, so as to further reduce the load acting on the blade, which makes it possible to reduce the load on the blade effectively.
(9) In some embodiments, in the above configuration (8), the limit-value setting part is configured to set the limit value closer to the feather side with an increase in the wind velocity when the wind velocity is within a range of from the threshold value U₁ to the threshold value U₂.
   With the above configuration (9), in a range where the wind velocity is from U₁ to U₂, the limit value is set closer to the feather side with an increase in the wind velocity, which makes it possible to appropriately avoid an excessive load applied to the blade due to a change in the wind direction.
(10) In some embodiments, in the above configuration (9), the limit-value setting part is configured to increase the limit value in proportion to the wind velocity when the wind velocity is in a range of from the threshold value U₁ to the threshold value U₂.
(11) In some embodiments, in any one the above configurations (1) to (10), the threshold value A₁ is from 30° to 50°.
   In a wind turbine of certain type, if the wind-direction difference is less than 30°, a gap between the actual wind velocity and the wind-velocity component of the front of the rotor is relatively small, and thus the pitch-angle demand value is adjusted to the feather side under the control of the rotation speed of the rotor if the wind velocity is large to some extent. Thus, when the wind-direction difference is less than 30°, an excessive load is seldom applied to the blade.
   On the other hand, when the wind-direction difference is greater than 50°, a gap between the actual wind velocity and the wind-velocity component of the front of the rotor is relatively large, and the pitch-angle demand value is often fixed to the full fine pitch angle under the control of the rotation speed of the rotor even if the wind-velocity acting on the wind turbine blade is large to some extent. Thus, when the wind-direction difference is greater than 50°, an excessive load is likely to be applied to the blade.
   In this regard, with the above configuration (11), with the threshold value A₁ set in a range of from 30° to 50°, it is possible to restrict the pitch angle with the limit value described in the above (1) to (10) in accordance with the level of the load generated on the blade, and thus to avoid an excessive load applied to the blade effectively.
(12) In some embodiments, in any one of the above configurations (4) to (6), the threshold value A₂ satisfies a relationship of A₂(°) ≥ A₁(°) + 5°.
   As described above, the greater the wind-direction difference is, the smaller the front component of the wind velocity becomes as compared to the actual wind velocity. Thus, the pitch-angle demand value by the control of the rotation speed takes a value closer to the fine side, and a load acting on the blades tends to become larger. Thus, as the wind-direction difference becomes larger, the necessity to impose a limitation on the pitch-angle demand value calculated on the basis of the rotation speed of the rotor with a limit value increases.
   In this regard, with the above configuration (12), with the difference between the threshold values A₁ and A₂ for the limit value of the pitch angle being 5° or more, it is possible to impose an appropriate limit corresponding to the necessity to impose a limitation on the pitch-angle demand value.
(13) In some embodiments, in any one of the above configurations (4) to (10), the limit-value setting part is configured to set, as the limit value, a pitch angle closer to the feather side from the full fine pitch angle by Δθ if the angle between the wind direction and the orientation of the nacelle is at the threshold value A₂, the Δθ satisfying a relationship of 2° ≤ Δθ(°) ≤ 15°.
   When the wind-direction difference is not less than a predetermined value, fixing the pitch angle in the vicinity of the full fine pitch angle as described above may cause an excessive load on the blade. On the other hand, if the pitch angle is changed to the feather side to some extent, the same problem arises as those in shutting down the wind turbine power generation facility. That is, if the pitch angle is close to the feather side to some extent while the wind-direction difference is not less than a predetermined value, a large load difference is generated between a plurality of wind turbine blades, which may generate a large load at the tower top.
   In this regard, with the above configuration (13), with the limit value at the time when the wind-direction difference is at A₂ being a pitch angle closer to the feather side by 2° to 15° from the full fine pitch angle, it is possible to avoid an excessive load generated at the blade and the tower top due to the wind-direction difference.
(14) A method of controlling a wind turbine power generation facility according to at least one embodiment of the present invention is for a wind turbine power generation facility which includes: a rotor including a wind turbine blade; a nacelle for supporting the rotor rotatably; a yaw driving part configured to rotate the nacelle; and a pitch driving part configured to change a pitch angle of the wind turbine blade. The method includes: a pitch-control step of providing the pitch driving part with a pitch-angle command value to control the pitch driving part; a demand-value calculation step of calculating a pitch-angle demand value on the basis of at least a rotation speed of the rotor; a limit-value setting step of setting a pitch angle between a full fine pitch angle (θ₀) and a full feather pitch angle as a limit value, if at least an angle between a wind direction and an orientation of the nacelle is not less than a threshold value A₁ (where A₁ > 0); and a command-value calculation step of setting the limit value as the pitch-angle command value if the pitch-angle demand value is a value closer to the full fine pitch angle than the limit value is, and to set the pitch-angle demand value as the pitch-angle command value if the pitch-angle demand value is a value equal to the limit value or closer to the full feather pitch angle than the limit value is.

When the wind-direction difference is larger than a predetermined value, the wind-velocity component from the front of the rotor is smaller than the wind velocity actually acting on the wind turbine blade, and thus the pitch-angle demand value becomes a value close to the full fine pitch angle in order to maintain the rotation speed of the rotor, which causes an excessive load applied to the blade.

In this regard, with the above method (14), if the angle between the wind direction and the orientation of the nacelle (wind-direction difference) is greater than the predetermined value, the limit value of the pitch angle is set to a value closer to the feather side from the full fine pitch angle, and a limitation by the limit value is imposed on the pitch angle demand value calculated on the basis of the rotation speed of the rotor. In this way, even if the wind-direction difference is greater than the predetermined value it is possible to prevent the pitch angle of the wind turbine blade from being maintained to be in the vicinity of the full fine pitch angle, and to avoid an excessive load being applied to the blades due to a change in the wind direction.

Meanwhile, even if the above limit value of the pitch angle as described in the above (14) is not provided, in some cases it is possible to reduce the load applied to the wind turbine blade to avoid an excessive load on the blade by shutting down the wind turbine power generation facility and changing the pitch angle of the wind turbine blade to the full feather pitch angle. However, in such case, during the shutdown, a large load difference is generated between a plurality of wind turbine blades while the pitch angles of the wind turbine blades shift to the full feather pitch angle, which may generate a large load at the tower top. In this regard, with the above method (14), it is possible to avoid an excessive load being applied to the blades without shutting down the wind turbine power generation facility, which makes it possible to avoid an excessive load being applied to the blades and the tower top.

According to at least one embodiment of the present invention, it is possible to provide a wind turbine power generation facility whereby it is possible to avoid an excessive load applied to blades due to a change in wind direction.

### BRIEF DESCRIPTION OF DRAWINGS

FIG. 1 is an overall schematic configuration diagram of a wind turbine power generation facility according to one embodiment.
FIG. 2 is a diagram for explaining a wind-direction difference in a wind turbine power generation facility according to one embodiment.
FIGs. 3A and 3B are diagrams for explaining the principle that an excessive load is applied to a blade in a wind turbine power generation facility.
FIGs. 4A to 4C are diagrams for explaining the principle that a load is generated at a tower top in a wind turbine power generation facility.
FIGs. 5A to 5C are diagrams for explaining the principle that a load is generated at a tower top in a wind turbine power generation facility.
FIG. 6 is a configuration diagram of a controller according to one embodiment.
FIG. 7 is a control flow of a wind turbine power generation facility according to one embodiment.
FIG. 8 is a block diagram of a limit-value setting part according to one embodiment.
FIGs. 9A and 9B are diagrams illustrating lookup tables of a limit-value setting part according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

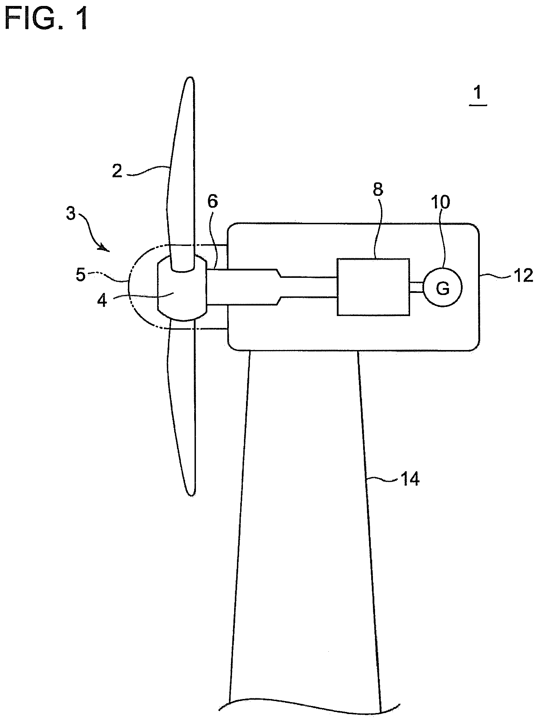

Firstly, with reference to FIG. 1, the overall configuration of a wind turbine power generation facility according to one embodiment will be described. FIG. 1 is an overall schematic configuration diagram of a wind turbine power generation facility according to one embodiment. As illustrated in the drawing, the wind turbine power generation facility 1 includes a rotor 3 including a hub 4 with wind turbine blades 2 mounted thereto and a rotational shaft 6 coupled to the hub 4, a generator 10, and a drivetrain 8 for transmitting rotation energy of the rotor 3 to the generator 10 via the rotation shaft 9. The rotor 3 is supported rotatably to a nacelle 12. Further, the nacelle 12 is supported to a tower 14 rotatably via a yaw slewing bearing 18. The generator 10 is configured to be driven by the rotational energy of the rotor 3 transmitted by the drivetrain 8. The hub 4 may be covered by a hub cover 5.

In this wind turbine power generation facility 1, when the entire rotor 3 rotates by the force of wind received by the wind turbine blades 2, the rotation is inputted to the drivetrain 8 via the rotational shaft 6. The rotation inputted from the rotational shaft 6 is transmitted to the generator 10 by the drivetrain 8 via the rotation shaft 9. The drivetrain 8 may be a speed increasing unit configured to increase the speed of the rotation inputted from the rotational shaft 6. The drivetrain 8 may be a hydraulic drivetrain including a hydraulic pump, a highpressure oil line, a low-pressure oil line and a hydraulic motor. Alternatively, the drivetrain 8 may be a mechanical (gear-type) speed increasing unit.

Further, the wind turbine power generation facility 1 may be a wind turbine power generation facility of direct-drive type in which the hub 4 and the generator 10 are directly coupled to each other and not via the drivetrain 8.

The drivetrain 8 and the generator 10 may be housed inside the nacelle 12 supported on the tower 14. The tower 14 may be disposed on a base on water or on land.

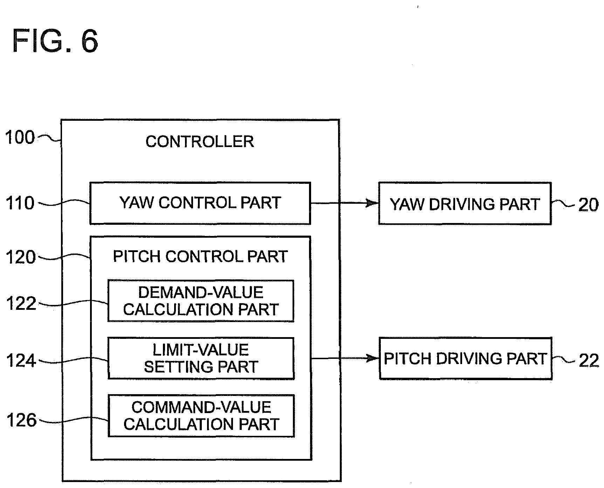

The wind turbine power generation facility 1 further includes a yaw driving part 20 configured to rotate the nacelle 12, a pitch driving part 22 configured to change the pitch angles of the wind turbine blades 2, and a controller 100 (see FIG. 6) for controlling the pitch driving part.

The yaw driving part 20 may include a yaw motor (not illustrated) for rotating the yaw slewing bearing 18, and a gear disposed between the yaw slewing bearing 18 and the yaw motor. The yaw driving part 20 may be configured to receive a command value from a yaw control part 110 (see FIG. 6) of the controller 100, and to rotate the nacelle 12 with respect to the tower 14 about the center axis of the tower 14 on the basis of the command value so as to control the yaw angle (orientation of the nacelle 12).

The pitch driving part 22 may include a hydraulic cylinder (not illustrated), a pressurized-oil source (e.g. hydraulic pump; not illustrated) for supplying pressurized oil to the hydraulic cylinder, and a hydraulic valve (not illustrated) for adjusting the amount of pressurized oil supplied to the hydraulic cylinder. For instance, each of the wind turbine blades 2 may be connected to a piston rod of the hydraulic cylinder at the blade root portion, so that the pitch angle changes in accordance with the stroke value of the hydraulic cylinder.

The pitch driving part 22 may adjust the opening degree of the hydraulic valve to supply a required amount of pressurized oil to the hydraulic cylinder so that the pitch angle of the wind turbine blade 2 reaches a pitch-angle command value received from the controller 100 (see FIG. 6).

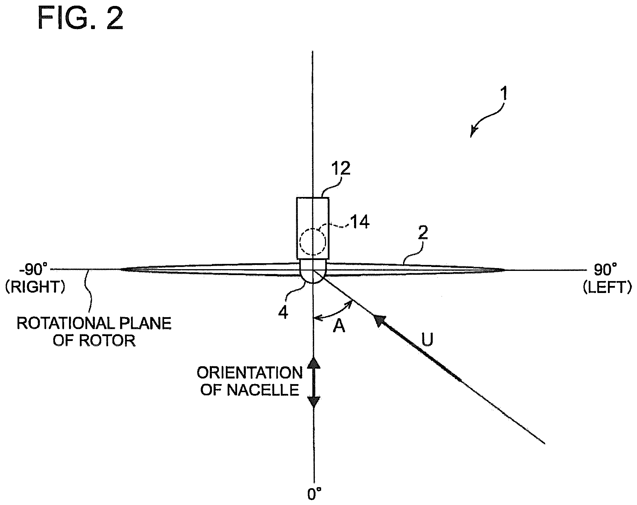

With reference to FIGs. 2 to 5, described below is a mechanism by which an excessive load is generated on the blades when the wind-direction difference is large in the wind turbine power generation facility.

FIG. 2 is a diagram for explaining a wind-direction difference in a wind turbine power generation facility. In the present specification, "wind-direction difference" refers to an absolute value (angle A illustrated in FIG. 2) of the angle between the wind direction and the orientation of the nacelle 12.

In FIG. 2, the arrow U represents wind that blows toward the wind turbine power generation facility 1. Further, the orientation of the nacelle 12 is a direction that is orthogonal to the rotational plane of the rotor 3. Thus, in the present specification, the angle A formed between the wind direction represented by the arrow U and the orientation of the nacelle 12 is referred to as "wind-direction difference".

In the wind turbine power generation facility 1, where the yaw angle is controlled in accordance with the orientation of the nacelle 12 (orientation of the rotational plane of the rotor 3), the nacelle 12 is slewed so as to follow the wind direction by the yaw driving part 20 when a change occurs in the wind direction . In this way, it is possible to convert wind energy into electric energy efficiently by receiving wind from the front of the rotor 3 even when the wind direction changes.

However, in the wind turbine power generation facility 1 with the above yaw control, when a rapid change occurs in the wind direction, the yaw following may take some time and the wind-direction difference A, which is the angle between the wind direction and the orientation of the nacelle 12, may increase as illustrated in FIG. 2.

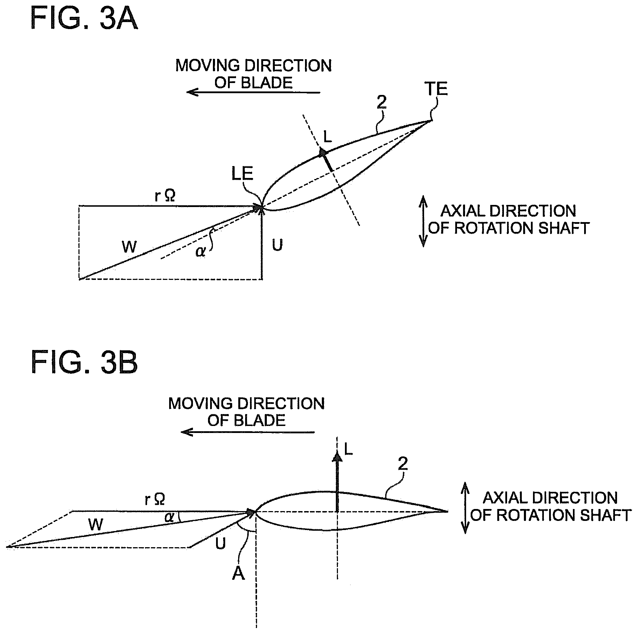

FIGs. 3A and 3B are diagrams for explaining the principle that an excessive load is applied to wind turbine blades in a wind turbine power generation facility. Both drawings illustrate a cross section of the wind turbine blade 2 at the time when the wind turbine blade 2 is in the vicinity of the lowest position in a single rotation of the rotor 3. FIG. 3A is a schematic diagram illustrating a force that is applied to the wind turbine blade 2 when the wind turbine blade 2 receives wind from the front of the rotor 3, and FIG. 3B is a schematic diagram illustrating a force that is applied to the wind turbine blade 2 when the wind-direction difference is large to some extent. In FIGs. 3 to 5, U represents a wind velocity vector, rΩ represents a tip-speed vector, and W represents a relative wind velocity vector based on the wind turbine blade 2. The relative wind velocity W can be obtained on the basis of the wind velocity U and the tip speed rΩ. Further, α represents an attack angle and L represents lift acting on the wind turbine blade 2. Herein, "attack angle" refers to an angle between a cord direction of the wind turbine blade 2 (direction connecting the leading edge LE and the trailing edge TE of the wind turbine blade 2) and the direction of the relative wind velocity W.

To change the pitch angle toward "the fine side" means to change the pitch angle so that torque is applied to the rotational shaft 6 by wind received by the wind turbine blade 2. Further, to change the pitch angle toward "the feather side" means to change the pitch angle of the wind turbine blade 2 so as to let the wind through (wind acting on the wind turbine blade 2 does not apply torque to the rotational shaft 6).

As illustrated in FIG. 3A, when the wind turbine blade 2 receives wind from the front of the rotor 3, if wind velocity is large to some extent, the pitch angle is closer to the feather side from the full fine position in order to restrict the rotation speed of the rotor.

Further, as illustrated in FIG. 3B, when the wind-direction difference A becomes large and the wind turbine blade 2 receives wind diagonally from the front of the rotor, the wind-velocity component (WcosA) from the front of the rotor becomes smaller than the actual wind velocity. Thus, in the control of the rotation speed based on the pitch angle, the pitch angle of the wind turbine blade 2 is controlled to be closer to the fine side than in a case illustrated in FIG. 3A in order to maintain the rotation speed of the rotor. Then, as illustrated in FIG. 3B, the pitch angle may be maintained in the vicinity of the full fine pitch angle.

It is known that the lift L acting on the wind turbine blade 2 generally becomes larger with an increase in the attack angle α, and in proportion to the square of the relative wind velocity W.

In the case of FIG. 3B, compared to the case of FIG. 3A, the magnitude of the wind velocity U is the same but the relative wind velocity W is larger, and the attack angle α is larger as well. Thus, the lift L acting on the wind turbine blade 2 is larger. Further, in the case of FIG. 3B, since the pitch angle of the wind turbine blade 2 is close to the full fine pitch angle, a substantial part of the lift L acts on the wind turbine blade 2 as a component (thrust force) in the axial direction of the rotational shaft 6. That is, a large load is applied to the wind turbine blade 2 in a direction the wind turbine blade 2 is forced toward the tower 14, which raises a possibility that the wind turbine blade 2 contacts the tower when approaching the vicinity of the lowest position.

Meanwhile, in some cases, it is possible to reduce the load applied to the wind turbine blade 2 by shutting down the wind turbine power generation facility 1 and changing the pitch angle of the wind turbine blade 2 to the full feather pitch angle. However, in such case, during the shutdown, a large load difference is generated between the plurality of wind turbine blades while the pitch angles of the wind turbine blades 2 shift to the full feather pitch angle, which may generate a large load at the tower top.

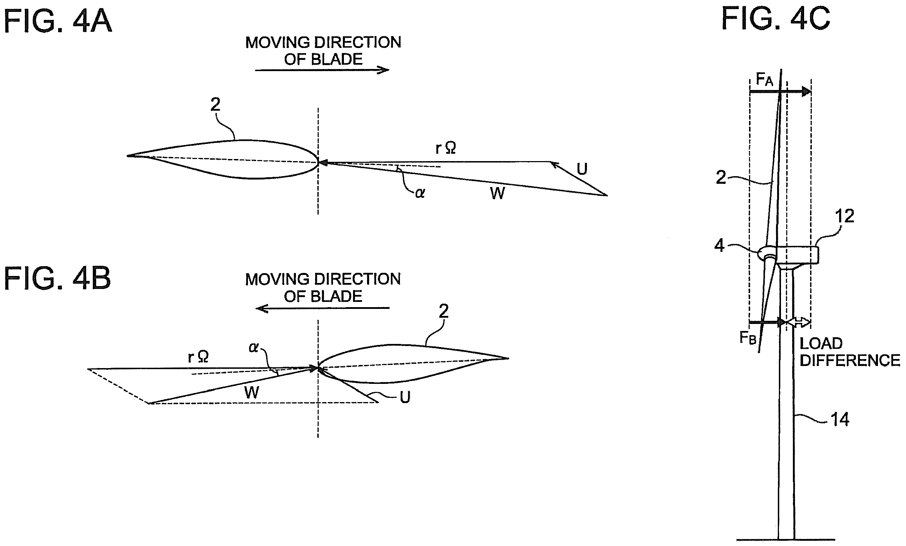

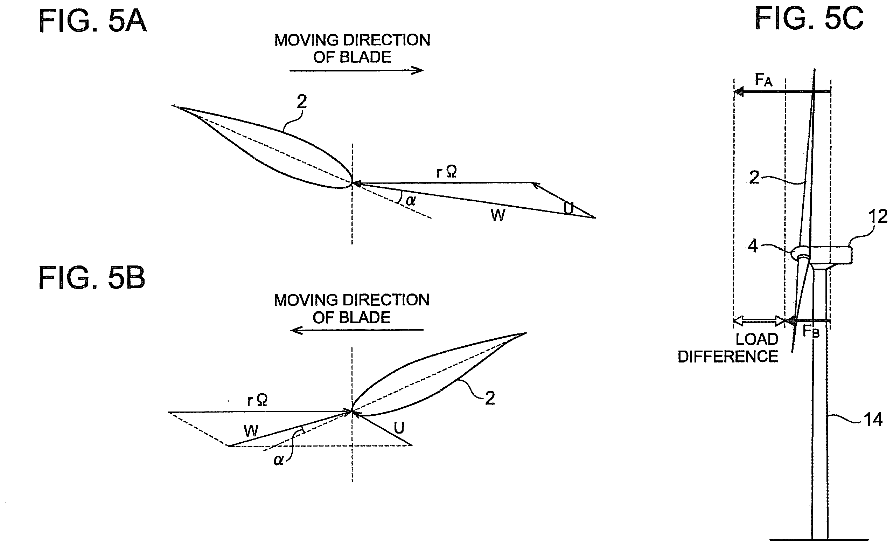

FIGs. 4A to 4C and 5A to 5C are diagrams for explaining the principle that a load is generated at a tower top in a wind turbine power generation facility. FIGs. 4A to 4C illustrate cross sections of the wind turbine blade 2 where the control of the rotation speed based on the pitch angle is continued without shutting down the wind turbine power generation facility 1 when the wind direction difference has become large. FIGs. 5A to 5C illustrate cross sections of the wind turbine blade 2 while the wind turbine power generation facility 1 is shut down and the pitch angle is being changed to the full feather pitch angle, when the wind direction difference has become large. FIGs. 4A and 5A illustrate cross sections of the wind turbine blade 2 at the time when the wind turbine blade 2 has arrived at the vicinity of the top position in a single rotation of the rotor 3. FIGs. 4B and 5B illustrate cross sections of the wind turbine blade 2 at the time when the wind turbine blade 2 has arrived at the vicinity of the lowest position in the single rotation of the rotor 3.

If the control of the rotation speed based on the pitch angle is to be continued without shutting down the wind turbine power generation facility 1 when the wind direction difference has become large, the relative wind velocity W is larger and the attack angle α is smaller when the wind turbine blade 2 is at the top position (FIG. 4A) than when the wind turbine blade 2 is at the lowest position (FIG. 4B). Since the lift acting on the wind turbine blade 2 is affected by the square of the relative wind velocity W, the load acting on the wind turbine blade 2 is larger when the wind turbine blade 2 at the top position (F_{A}) as in FIG. 4A than when the wind turbine blade 2 is at the lowest position (F_{B}) in FIG. 4B, as illustrated in FIG. 4C. Thus, due to the difference between the above loads, an upward moment (moment acting about an axis at which the rotational plane of the rotor 3 and the horizontal plane intersect with each other) is generated at the tower top.

On the other hand, while the wind turbine power generation facility 1 is shut down and the pitch angle is changed to the full feather pitch angle when the wind direction difference has become large (at this time, the pitch angle is between the full fine and the full feather angles), the relative wind velocity W is larger when the wind turbine blade 2 is at the top position (FIG. 5A) than when the wind turbine blade 2 is at the lowest position (FIG. 5B). Further, since shutdown is in progress, the rotation speed of the rotor is reduced as compared to that during operation of the wind turbine power generation facility 1, thereby reducing the tip speed rΩ. Thus, the difference in the relative wind velocity W becomes greater than that during operation (see FIG. 4).

Further, while the absolute value of the attack angle α is greater in FIG. 5A than in FIG. 5B, the attack angle α is in such a range that the attack angle α is negative and the lift coefficient corresponding to the attack angle α is negative in both of FIGs. 5A and 5B. That is, the direction of the lift acting on the wind turbine blade 2 is opposite to that illustrated in FIG. 4A.

Therefore, as illustrated in FIG. 5C, both of the relative wind velocity W and the absolute value of the attack angle α are larger in FIG. 5A than in FIG. 5B. Thus, the absolute value of the load F_{A} of the wind turbine blade 2 at the top position is larger than the absolute value of the load F_{B} of the wind turbine blade 2 at the bottom position, and the difference between the above loads increases as compared to that during operation of the wind turbine power generation facility 1 (see FIG. 4). Further, since the direction of the load acting on the wind turbine blade 2 is opposite to that in FIG. 4, a downward moment (moment acting about an axis at which the rotational plane of the rotor 3 and the horizontal plane intersect with each other) is generated at the tower top.

As described above, while the wind turbine power generation facility 1 is to be shut down, a large load difference may be generated between the plurality of wind turbine blades while the pitch angles of the wind turbine blades 2 shift to the full feather pitch angle, which may generate a large load at the tower top.

With the wind turbine power generation facility and the method of controlling the same according to the embodiment of the present invention, it is possible to avoid an excessive load applied to the blades and the tower top described above.

With reference to FIGs. 6 to 9, a controller according to one embodiment and a control method using the controller will be described below.

FIG. 6 is a configuration diagram of a controller according to one embodiment. As illustrated in the drawing, the controller 100 includes a pitch control part 120 including a demand-value calculation part 122, a limit-value setting part 124, and a command-value calculation part 126, and is configured to control the pitch driving part 22 by providing the pitch driving part 22 with the pitch-angle command value calculated by the command-value calculation part 126.

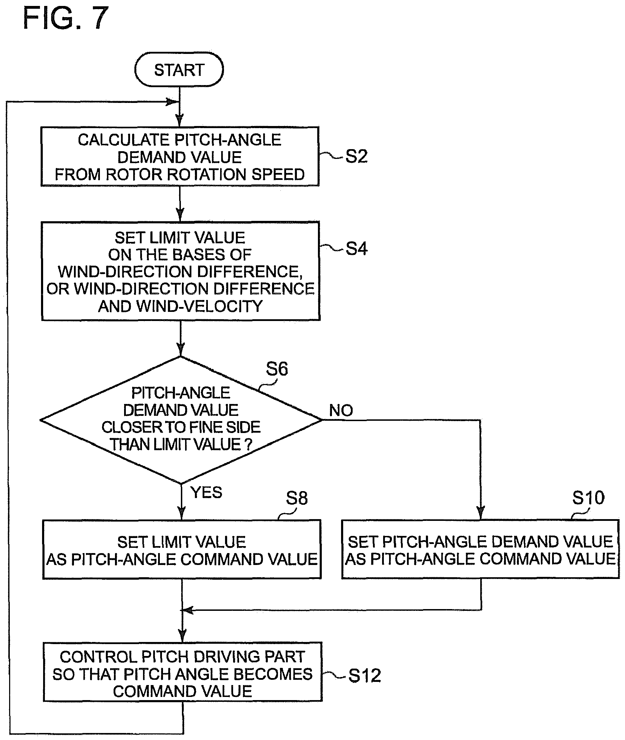

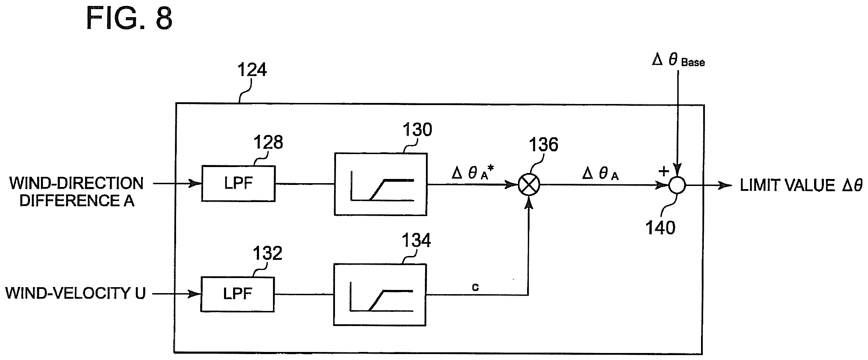

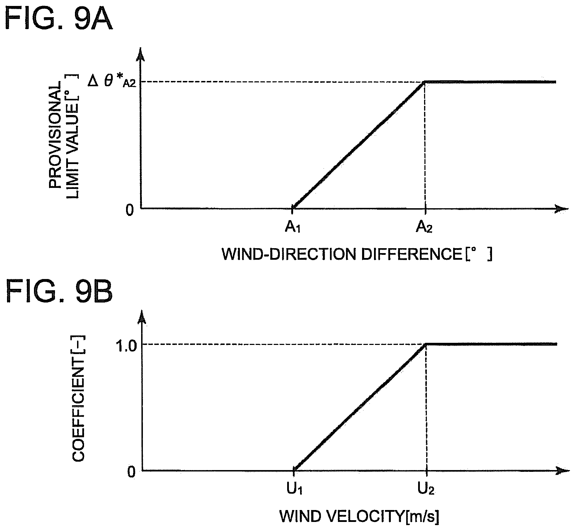

The control flow for the pitch driving part 22 using the controller will be described with reference to FIGs. 7 and 9. FIG. 7 is a diagram illustrating a control flow of a wind turbine power generation facility according to one embodiment. FIG. 8 is a block diagram of a limit-value setting part according to one embodiment. FIGs. 9A and 9B are diagrams illustrating lookup tables of a limit-value setting part according to one embodiment.

An overview of the control flow of a wind turbine power generation facility 1 according to one embodiment is as follows. First, the pitch-angle demand value is calculated by the demand-value calculation part 122 on the basis of the rotation speed of the rotor 3 (S2 in FIG. 7). That is, a pitch angle for controlling the rotation speed of the rotor 3 to a predetermined value is calculated as the pitch-angle demand value. The pitch-angle demand value may be calculated taking account of a factor other than the rotation speed of the rotor, in addition to the rotation speed of the rotor. For instance, the pitch-angle demand value may be calculated taking account of torque acting on the rotational shaft 6, in addition to the rotation speed of the rotor. In a region where the wind velocity is low, the pitch-angle demand value may be maintained to be in the vicinity of the full fine pitch angle in some cases in order to increase the aerodynamic torque received by the wind turbine blades 2.

On the other hand, when the angle between the wind direction and the orientation of the nacelle, which is the wind-direction difference, is at a threshold value A₁ (where A₁>0) or greater, the pitch angle between the full fine pitch angle (θ₀) and the full feather pitch angle is set as a limit value by the limit-value setting part 124 (S4). At this time, the limit value may be determined on the basis of the wind-direction difference. Alternatively, the limit value may be determined on the basis of the wind-direction difference and the wind velocity.

The limit value set in S4 is compared to the pitch-angle demand value calculated by the demand-value calculation part 122 by the command-value calculation part 126 (S6). If the pitch angle demand value is closer to the full fine pitch angle (fine side) than the limit value is, the limit value is set as the pitch angle command value (S8). If the pitch angle demand value is equal to the limit value or closer to the full feather pitch angle (feather side) than the limit value is, the pitch-angle demand value is set as the pitch angle command value (S10). Specifically, in steps S6 to S10, a limitation is imposed on the pitch-angle command value determined on the basis of the pitch-angle demand value calculated in S2 so that the pitch angle of the wind turbine blade 2 does not get closer to the fine side than the limit value is, using the limit value set in S4.

Then, the pitch-angle command value set in S8 or S10 is given to the pitch driving part, and the pitch driving part is controlled so that the pitch angle of the wind turbine blade 2 becomes the pitch-angle command value (S12).

According to the control flow of the wind turbine power generation facility 1 described above, if the angle between the wind direction and the orientation of the nacelle 12 (wind-direction difference) is greater than the predetermined threshold value A₁, the limit value of the pitch angle is set to a value closer to the feather side from the full fine pitch angle, and a limitation by the limit value is imposed on the pitch-angle demand value calculated on the basis of the rotation speed of the rotor. In this way, even if the wind-direction difference is greater than the predetermined threshold value A₁, it is possible to prevent the pitch angle of the wind turbine blade 2 from being maintained to be in the vicinity of the full fine pitch angle, and to avoid an excessive load being applied to the blades due to a change in the wind direction.

Further, according to the control flow of the wind turbine power generation facility 1 described above, it is possible to avoid an excessive load being applied to the blades without shutting down the wind turbine power generation facility 1, which makes it possible to avoid an excessive load being applied to not only the blades but also the tower top.

Next, the limit-value setting part 124 according to one embodiment will be described in detail.

The limit-value setting part 124 according to one embodiment determines a limit value on the basis of the wind-direction difference A and the wind velocity U.

As illustrated in the block diagram in FIG. 8, the limit-value setting part 124 receives a signal representing the wind-direction difference A and the wind velocity U as an input. The wind-direction difference A is an angle between the wind direction and the orientation of the nacelle 12 (orientation of the rotational plane of the wind turbine rotor), and may be obtained from a measurement value obtained by an anemoscope and a nacelle direction indicator disposed on the nacelle 12, for instance, of the wind turbine power generation facility 1. The wind velocity U is the wind velocity acting on the wind turbine blade 2, and may be obtained from a measurement value obtained by the anemometer disposed on the nacelle 12, for instance, of the wind turbine power generation facility 1.

In the limit-value setting part 124, the signal representing the inputted wind-direction difference A is filtered to eliminate noise of a relatively high frequency by the low-pass filter 128, and a provisional limit value Δθ_{A}* corresponding to the wind-direction difference A is determined by reference to a lookup table 130. The lookup table 130 is a table that defines a correlation between the wind-direction difference A and the provisional limit value Δθ_{A}* in advance, and may be stored in a storage (not illustrated) of the controller 100.

Further, in the limit-value setting part 124, the signal representing the inputted wind velocity U is filtered to eliminate noise of a relatively high frequency by the low-pass filter 132, and then a coefficient c corresponding to the wind velocity U (where 0 ≤ c ≤ 1) is determined by reference to a lookup table 134. The lookup table 134 is a table that defines a correlation between the wind velocity U and the coefficient c in advance, and may be stored in a storage (not illustrated) of the controller 100.

Then, the provisional limit value Δθ_{A}* determined from the lookup table 130 in accordance with the wind-direction difference A is multiplied by the coefficient c determined from the lookup table 134 in accordance with the wind velocity U in the multiplier 136, thereby obtaining a limit value Δθ_{A} based on the wind-direction difference.

The graph of FIG. 9A shows a correlation between the wind-direction difference A and the provisional limit value Δθ_{A}* defined in the lookup table 130 referred to by the limit-value setting part 124 according to one embodiment.

As shown in the graph of FIG. 9A, in the limit-value setting part 124, the provisional limit value Δθ_{A}* is set to zero when the wind-direction difference is not less than zero and less than the threshold value A₁, and the provisional limit value Δθ_{A}* is set to a value larger than zero in a range where the wind-direction difference is not less than the threshold value A₁. Further, when the wind-direction difference is not less than the threshold value A₂ (where A₂ > A₁), the provisional limit value Δθ_{A}* is set to a value larger than the value at the time when the wind-direction difference is at the threshold value A₁ (i.e., gets closer to the feather side). Also, when the wind-direction difference is in the range of from the threshold value A₁ to the threshold value A₂, the provisional limit value Δθ_{A}* increases with an increase in the wind-direction difference (i.e., gets closer to the feather side). Further, when the wind-direction difference is not less than the threshold value A₂ (where A₂ > A₁), the provisional limit value Δθ* is set so as to be a constant value Δθ_{A2}*.

The greater the wind-direction difference is, the smaller the front component of the wind velocity becomes as compared to the actual wind velocity. Thus, the pitch-angle demand value by the control of the rotation speed becomes a value closer to the fine side, and a load acting on the blades tends to become larger.

As described above, setting the limit value closer to the feather side with an increase in the wind-direction difference makes it possible to appropriately avoid an excessive load applied to the blades due to a change in the wind direction.

In some embodiments, the threshold value A₁ is from 30° to 50°. With the threshold value A₁ set in the above range, it is possible to restrict the pitch angle with a limit value corresponding to the wind-direction difference in accordance with the level of the load generated on the blades, and effectively avoid an excessive load being applied to the blades.

In some embodiments, the threshold value A₂ satisfies a relationship of A₂ ≥ A₁ + 5°. With the difference between the threshold values A₁ and A₂ for the limit value of the pitch angle being 5° or more, it is possible to impose an appropriate limit corresponding to the necessity to impose a limitation on the pitch-angle demand value.

In some embodiments, the provisional limit value Δθ_{A}* at the time when the wind-direction difference is at the threshold value A₂ satisfies a relationship of 2° ≤ Δθ_{A}* ≤ 15°. As described above, with the limit value at the time when the wind-direction difference is at the threshold value A₂ being a pitch angle closer to the feather side by 2° to 15° from the full fine pitch angle, it is possible to avoid an excessive load being applied to the blades due to the wind-direction difference appropriately, and to avoid an excessive load being applied to the tower top due to the wind-direction difference.

The graph of FIG. 9B shows a correlation between the wind velocity U and the coefficient c defined in the lookup table 134 referred to by the limit-value setting part 124 according to one embodiment.

As shown in the graph of FIG. 9B, in the limit-value setting part 124, the coefficient c is set to zero when the wind velocity is not less than zero and less than the threshold value U₁, and the coefficient c is set to a value larger than zero in a range where the wind velocity is not less than the threshold value U₁. Further, when the wind velocity is not less than the threshold value U₂ (where U₂ > U₁), the coefficient c is set to 1, which is a value larger than the value at the time when the wind velocity is at the threshold value U₁ (i.e., gets closer to the feather side). Also, when the wind velocity is in the range of from the threshold value U₁ to the threshold value U₂, the coefficient c increases with an increase in the wind velocity (i.e., gets closer to the feather side). Further, when the wind velocity is not less than the threshold value U₂ (where U₂ > U₁), the coefficient c is set so as to be a constant value.

If the wind-direction difference is not less than a predetermined value (A₁), the wind-velocity component at the front of the rotor 3 is small, and thus the pitch-angle demand value is fixed to the fine side trying to maintain the rotation speed of the rotor, which causes the load applied to the blades to tend to increase. At this time, the greater the wind velocity acting on the wind turbine blade 2 is, the more remarkable the tendency of the increase in the load due to the pitch-angle demand value being fixed to the fine side is.

As described above, determining the limit value on the basis of the wind velocity U makes it possible to reduce the load on the blade effectively. Further, since the limit value of the pitch angle is set closer to the feather side as the wind velocity increases so as to reduce the load applied to the blades even further, it is possible to reduce the load on the blades effectively.

On the other hand, in one embodiment, independently from the limit value Δθ_{A} based on the wind-direction difference, a base limit value Δθ_{Base} determined regardless of the magnitude relationship of the wind-direction difference A and the threshold value A₁ is set. In this case, the limit value Δθ is obtained by adding up the limit value Δθ_{A} based on the wind-direction difference and the base limit value Δθ_{Base} determined regardless of the magnitude of the wind-direction difference A by the adder 140.

The base limit value Δθ_{Base} may be a full fine pitch angle θ₀. Further, the base limit value Δθ_{Base} may change in accordance with the output of the generator.

Alternatively, in one embodiment, the limit value Δθ_{A} based on the wind-direction difference may be used as the limit value Δθ directly without setting the base limit value Δθ_{Base} not depending on the wind-direction difference A.

In the above configuration, when the wind-direction difference is not more than the threshold value A₁, or when the wind velocity is not more than the threshold value U₁, one of the provisional limit value or the coefficient c is zero, and accordingly the limit value based on the wind-direction difference is also zero. That is, only if the wind-direction difference is not less than the threshold value A₁ and the wind velocity is not less than the threshold value U₁, the limit value based on the wind-direction difference becomes greater than zero, and affects the actual control of the pitch angle.

The load applied to the blades is likely to become excessive when both of the wind-direction difference and the wind velocity are large. Thus, with the limit value set as described above, it is possible to avoid an excessive load being applied to the blades appropriately.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A wind turbine power generation facility (1) comprising:
a rotor (3) including a wind turbine blade (2);
a nacelle (12) for rotatably supporting the rotor (3);
a yaw driving part (20) configured to rotate the nacelle (12);
a pitch driving part (22) configured to change a pitch angle of the wind turbine blade (2); and
a controller (100) configured to provide the pitch driving part (22) with a pitch-angle command value to control the pitch driving part,
wherein the controller (100) includes:
a demand-value calculation part (122) configured to calculate a pitch-angle demand value on the basis of at least a rotation speed of the rotor (3);
a limit-value setting part (124) for setting a pitch angle between a full fine pitch angle and a full feather pitch angle as a limit value, if at least an angle between a wind direction and an orientation of the nacelle (12) is not less than a threshold value A₁ (where A₁ > 0); and
a command-value calculation part (126) configured to set the limit value as the pitch-angle command value if the pitch-angle demand value is a value closer to the full fine pitch angle than the limit value is, and to set the pitch-angle demand value as the pitch-angle command value if the pitch-angle demand value is a value equal to the limit value or closer to the full feather pitch angle than the limit value is,
wherein the limit-value setting part (124) is configured to determine the limit value on the basis of the angle between the wind direction and the orientation of the nacelle (12), **characterized in that**
the limit-value setting part (124) is configured to, if the angle between the wind direction and the orientation of the nacelle (12) is not less than a threshold value A₂ which is larger than the threshold value A₁, set the limit value closer to a feather side than a value at the time when the angle is at the threshold value A₁.

2. The wind turbine power generation facility (1) according to claim 1,
wherein the limit-value setting part (124) is configured to set, as the limit value, a sum of: a base limit value which is set regardless of a magnitude relationship between the threshold value A₁ and the angle between the wind direction and the orientation of the nacelle (12); and a limit correction amount which is determined on the basis of the angle between the wind direction and the orientation of the nacelle (12) if the angle is not less than the threshold value A₁ (where A₁ > 0).

3. The wind turbine power generation facility (1) according to claim 1 or 2,
wherein the limit-value setting part (124) is configured to, if the angle between the wind direction and the orientation of the nacelle (12) is from the threshold value A₁ to the threshold value A₂, set the limit value closer to the feather side with an increase in the angle.

4. The wind turbine power generation facility (1) according to claim 3,
wherein the limit-value setting part (124) is configured to increase the limit value in proportion to the angle between the wind direction and the orientation of the nacelle (12) when the angle is within a range of from the threshold value A₁ to the threshold value A₂.

5. The wind turbine power generation facility (1) according to any one of claims 1 to 4,
wherein the limit-value setting part (124) is configured to determine the limit value on the basis of wind velocity.

6. The wind turbine power generation facility (1) according to claim 5,
wherein the limit-value setting part (124) is configured to, if the wind velocity is not less than a threshold value U₂ which is greater than a threshold value U₁, set the limit value closer to the feather side than a value at the time when the wind velocity is at the threshold value U₁.

7. The wind turbine power generation facility (1) according to claim 6,
wherein the limit-value setting part (124) is configured to set the limit value closer to the feather side with an increase in the wind velocity when the wind velocity is within a range of from the threshold value U₁ to the threshold value U₂.

8. The wind turbine power generation facility (1) according to claim 7,
wherein the limit-value setting part (124) is configured to increase the limit value in proportion to the wind velocity when the wind velocity is in a range of from the threshold value U₁ to the threshold value U₂.

9. The wind turbine power generation facility (1) according to any one of claims 1 to 8,
wherein the threshold value A₁ is from 30° to 50°.

10. The wind turbine power generation facility (1) according to any one of claims 1 to 4,
wherein the threshold value A₂ satisfies a relationship of A₂(°) ≥ A₁(°) + 5°.

11. The wind turbine power generation facility (1) according to any one of claims 1 to 8,
wherein the limit-value setting part (124) is configured to set, as the limit value, a pitch angle closer to the feather side from the full fine pitch angle by Δθ if the angle between the wind direction and the orientation of the nacelle is at the threshold value A₂, the Δθ satisfying a relationship of 2° ≤ Δθ (°) ≤ 15°.

12. A method of controlling a wind turbine power generation facility (1) which includes: a rotor (3) including a wind turbine blade (2); a nacelle (12) for supporting the rotor (3) rotatably; a yaw driving part (20) configured to rotate the nacelle (12); and a pitch driving part (22) configured to change a pitch angle of the wind turbine blade (2), the method comprising:
a pitch-control step of providing the pitch driving part with a pitch-angle command value to control the pitch driving part (22);
a demand-value calculation step of calculating a pitch-angle demand value on the basis of at least a rotation speed of the rotor (3);
a limit-value setting step of setting a pitch angle between a full fine pitch angle and a full feather pitch angle as a limit value, if at least an angle between a wind direction and an orientation of the nacelle (12) is not less than a threshold value A₁ (where A₁ > 0); and
a command-value calculation step of setting the limit value as the pitch-angle command value if the pitch-angle demand value is a value closer to the full fine pitch angle than the limit value is, and to set the pitch-angle demand value as the pitch-angle command value if the pitch-angle demand value is a value equal to the limit value or closer to the full feather pitch angle than the limit value is,
wherein the limit-value setting step comprises determining the limit value on the basis of the angle between the wind direction and the orientation of the nacelle (12),
**characterized in that**
the limit-value setting step comprises, if the angle between the wind direction and the orientation of the nacelle (12) is not less than a threshold value A₂ which is larger than the threshold value A₁, set the limit value closer to a feather side than a value at the time when the angle is at the threshold value A₁.

## Patentansprüche

1. Windturbinenkrafterzeugungsanlage (1) umfassend:
einen Rotor (3), der ein Windturbinenblatt (2) aufweist,
eine Gondel (12), um den Rotor (3) drehbar zu tragen,
ein Gierantriebselement (20), das dazu ausgelegt ist, die Gondel (12) zu drehen,
ein Anstellantriebselement (22), das dazu ausgelegt ist, einen Anstellwinkel des Windturbinenblattes (2) zu verändern, und
eine Steuerung (100), die dazu ausgelegt ist, dem Anstellantriebselement (22) einen Anstellwinkelbefehlswert zum Steuern des Anstellantriebselements bereitzustellen,
wobei die Steuerung (100) umfasst:
ein Sollwertberechnungselement (122), das dazu ausgelegt ist, einen Anstellwinkel-Sollwert basierend auf mindestens einer Drehzahl des Rotors (3) zu berechnen,
ein Grenzwertbestimmungselement (124) zum Bestimmen eines Anstellwinkels zwischen einem vollen Feinanstellwinkel und einem vollen Segelstellungs-Winkel als Grenzwert, falls mindestens ein Winkel zwischen einer Windrichtung und einer Ausrichtung der Gondel (12) nicht unter einem Schwellenwert (A₁) (wobei A₁ > 0) liegt, und
ein Befehlswertberechnungselement (126), das dazu ausgelegt ist, den Grenzwert als den Anstellwinkel-Befehlswert zu bestimmen, falls der Anstellwinkel-Sollwert ein Wert ist, der näher an dem vollen Feinanstellwinkel liegt als der Grenzwert, und dazu, den Anstellwinkel-Sollwert als den Anstellwinkel-Befehlswert zu bestimmen, falls der Anstellwinkel-Befehlswert ein Wert ist, der dem Grenzwert entspricht oder näher an der vollen Feinanstellwinkel liegt als der Grenzwert,
wobei das Grenzwertbestimmungselement (124) dazu ausgelegt ist, den Grenzwert basierend auf dem Winkel zwischen der Windrichtung und der Ausrichtung der Gondel (12) zu bestimmen,
**dadurch gekennzeichnet, dass**
das Grenzwertbestimmungselement (124) dazu ausgelegt ist, den Grenzwert, falls der Winkel zwischen der Windrichtung und der Ausrichtung der Gondel (12) nicht unter einem Schwellenwert A₂, der größer als der Schwellenwert A₁ ist, liegt, näher an die Segelstellungs-Seite zu setzen als ein Wert zu dem Zeitpunkt, wenn der Winkel sich an dem Schwellenwert A₁ befindet.

2. Windturbinenkrafterzeugungsanlage (1) nach Anspruch 1,
wobei das Grenzwertbestimmungselement (124) dazu ausgelegt ist, eine Summe aus einem Basisgrenzwert, der unabhängig eines Größenverhältnisses zwischen dem Schwellenwert A₁ und dem Winkel zwischen der Windrichtung und der Ausrichtung der Gondel (12) bestimmt wird, und einem Grenzkorrekturwert, der basierend auf dem Winkel zwischen der Windrichtung und der Ausrichtung der Gondel (12) bestimmt wird, falls der Winkel nicht unter dem Schwellenwert (A₁) (wobei A₁ > 0) liegt, als den Grenzwert zu bestimmen.

3. Windturbinenkrafterzeugungsanlage (1) nach Anspruch 1 oder 2,
wobei das Grenzwertbestimmungselement (124) dazu ausgelegt ist, den Grenzwert, falls der Winkel zwischen der Windrichtung und der Ausrichtung der Gondel (12) zwischen dem Schwellenwert A₁ und dem Schwellenwert A₂ liegt, näher an die Segelstellungs-Seite mit einer Vergrößerung des Winkels zu setzen.

4. Windturbinenkrafterzeugungsanlage (1) nach Anspruch 3,
wobei das Grenzwertbestimmungselement (124) dazu ausgelegt ist, den Grenzwert proportional zu dem Winkel zwischen der Windrichtung und der Ausrichtung der Gondel (12) zu vergrößern, wenn der Winkel in einem Bereich zwischen dem Schwellenwert A₁ und dem Schwellenwert A₂ liegt.

5. Windturbinenkrafterzeugungsanlage (1) nach einem der Ansprüche 1 bis 4,
wobei das Grenzwertbestimmungselement (124) dazu ausgelegt ist, den Grenzwert basierend auf der Windgeschwindigkeit zu bestimmen.

6. Windturbinenkrafterzeugungsanlage (1) nach Anspruch 5,
wobei das Grenzwertbestimmungselement (124) dazu ausgelegt ist, den Grenzwert, falls die Windgeschwindigkeit nicht unter einem Schwellenwert U₂, der größer als ein Schwellenwert U₁ ist, liegt, näher an die Segelstellungs-Seite zu setzen als einen Wert zu dem Zeitpunkt, wenn die Windgeschwindigkeit sich auf dem Schwellenwert U₁ befindet.

7. Windturbinenkrafterzeugungsanlage (1) nach Anspruch 6,
wobei das Grenzwertbestimmungselement (124) dazu ausgelegt ist, den Grenzwert näher an die Segelstellungs-Seite mit einer Erhöhung der Windgeschwindigkeit zu setzen, wenn die Windgeschwindigkeit in einem Bereich zwischen dem Schwellenwert U₁ und dem Schwellenwert U₂ liegt.

8. Windturbinenkrafterzeugungsanlage (1) nach Anspruch 7,
wobei das Grenzwertbestimmungselement (124) dazu ausgelegt ist, den Grenzwert proportional zu der Windgeschwindigkeit zu vergrößern, wenn die Windgeschwindigkeit in einem Bereich zwischen dem Schwellenwert U₁ und dem Schwellenwert U₂ liegt.

9. Windturbinenkrafterzeugungsanlage (1) nach einem der Ansprüche 1 bis 8,
wobei der Schwellenwert A₁ von 30° bis 50° reicht.

10. Windturbinenkrafterzeugungsanlage (1) nach einem der Ansprüche 1 bis 4, wobei der Schwellenwert A₂ die Beziehung A₂(°) ≥ A₁(°)+5° erfüllt.

11. Windturbinenkrafterzeugungsanlage (1) nach einem der Ansprüche 1 bis 8,
wobei das Grenzwertbestimmungselement (124) dazu ausgelegt ist, einen Anstellwinkel näher an die Segelstellungs-Seite von dem vollen Feinanstellwinkel bei Δθ als den Grenzwert zu setzen, falls sich der Winkel zwischen der Windrichtung und der Ausrichtung der Gondel auf dem Schwellenwert A₂ befindet, wobei Δθ die Beziehung von 2° ≤ Δθ(°) ≤ 15° erfüllt.

12. Verfahren zum Steuern einer Windturbinenkrafterzeugungsanlage (1), umfassend: einen Rotor (3), der ein Windturbinenblatt (2), eine Gondel (12), um den Rotor (3) drehbar zu tragen, ein Gierantriebsteil (20), das dazu ausgelegt ist, die Gondel (12) zu drehen, ein Anstellantriebselement (22), das dazu ausgelegt ist, einen Anstellwinkel des Windturbinenblattes (2) zu verändern, wobei das Verfahren umfasst:
einen Anstellsteuerungsschritt des Bereitstellens eines Anstellwinkel-Befehlswerts an das Anstellantriebselement zum Steuern des Anstellantriebselements (22),
einen Sollwertberechnungsschritt des Berechnens eines Anstellwinkel-Sollwerts basierend auf mindestens einer Drehzahl des Rotors (3),
einen Grenzwertbestimmungsschritt des Bestimmens eines Anstellwinkels zwischen einem vollen Feinanstellwinkel und einem vollen Segelstellungs-Winkel als Grenzwert, falls mindestens ein Winkel zwischen einer Windrichtung und einer Ausrichtung der Gondel (12) nicht unter einem Schwellenwert (A₁) (wobei A > 0) liegt, und
einen Befehlswertberechnungsschritt des Bestimmens des Grenzwerts als den Anstellwinkel-Befehlswert, falls der Anstellwinkel-Sollwert ein Wert ist, der näher an dem vollen Feinanstellwinkel liegt als der Grenzwert, und des Bestimmens des Anstellwinkel-Sollwerts als den Anstellwinkel-Befehlswert zu bestimmen, falls der Anstellwinkel-Befehlswert ein Wert ist, der dem Grenzwert entspricht oder näher an dem vollständigen Segelstellungs-Winkel als dem Grenzwert liegt,
wobei der Grenzwertbestimmungsschritt Bestimmen des Grenzwerts basieren auf dem Winkel zwischen der Windrichtung und der Ausrichtung der Gondel (12) aufweist,
**gekennzeichnet dadurch, dass**
der Grenzwertbestimmungsschritt aufweist, falls der Winkel zwischen der Windrichtung und der Ausrichtung der Gondel (12) nicht unter einem Schwellenwert A₂, der größer als der Schwellenwert A₁ ist, liegt, setzen des Grenzwerts näher an die Feinanstell-Seite als einen Wert zu dem Zeitpunkt, wenn der Winkel sich an dem Schwellenwert A₁ befindet.

## Revendications

1. Equipement de génération d'énergie éolienne (1) comprenant :
un rotor (3) comprenant une pale d'éolienne (2) ;
une nacelle (12) pour supporter en rotation le rotor (3) ;
une partie de commande de lacet (20) configurée pour faire tourner la nacelle (12) ;
une partie de commande de pas (22) configurée pour changer un angle de pas de la pale d'éolienne (2) ; et
un contrôleur (100) configuré pour fournir à la partie de commande de pas (22) une valeur de commande d'angle de pas pour commander la partie de commande de pas,
dans lequel le contrôleur (100) comprend :
une partie de calcul de valeur de demande (122) configurée pour calculer une valeur de demande d'angle de pas sur la base au moins d'une vitesse de rotation du rotor (3) ;
une partie d'établissement de valeur limite (124) pour établir un angle de pas entre un angle de pas fin total et un angle de pas de mise en drapeau total en tant que valeur limite, si au moins un angle entre une direction de vent et une orientation de la nacelle (12) est supérieur ou égal à une valeur de seuil A₁ (où A₁ > 0) ; et
une partie de calcul de valeur de commande (126) configurée pour établir la valeur limite en tant que valeur de commande d'angle de pas si la valeur de demande d'angle de pas est une valeur plus proche de l'angle de pas fin total que ne l'est la valeur limite, et pour établir la valeur de demande d'angle de pas en tant que valeur de commande d'angle de pas si la valeur de demande d'angle de pas est une valeur égale à la valeur limite ou plus proche de l'angle de pas de mise en drapeau total que ne l'est la valeur limite,
dans lequel la partie d'établissement de valeur limite (124) est configurée pour déterminer la valeur limite sur la base de l'angle entre la direction du vent et l'orientation de la nacelle (12),
**caractérisé en ce que**
la partie d'établissement de valeur limite (124) est configurée pour, si l'angle entre la direction du vent et l'orientation de la nacelle (12) est supérieur ou égal à une valeur de seuil A₂ qui est supérieure à la valeur de seuil A₁, établir la valeur limite à une valeur plus proche d'un côté de mise en drapeau qu'une valeur à l'instant auquel l'angle est à la valeur de seuil A₁.

2. Equipement de génération d'énergie éolienne (1) selon la revendication 1,
dans lequel la partie d'établissement de valeur limite (124) est configurée pour établir, en tant que valeur limite, une somme : d'une valeur limite de base qui est établie indépendamment d'une relation d'amplitude entre la valeur de seuil A₁ et l'angle entre la direction du vent et l'orientation de la nacelle (12) ; et d'une quantité de correction de limite qui est déterminée sur la base de l'angle entre la direction du vent et l'orientation de la nacelle (12) si l'angle est supérieur ou égal à la valeur de seuil A₁ (où A₁ > 0).

3. Equipement de génération d'énergie éolienne (1) selon la revendication 1 ou 2,
dans lequel la partie d'établissement de valeur limite (124) est configurée pour, si l'angle entre la direction du vent et l'orientation de la nacelle (12) est de la valeur de seuil A₁ à la valeur de seuil A₂, établir la valeur limite à une valeur plus proche du côté de mise en drapeau avec une augmentation de l'angle.

4. Equipement de génération d'énergie éolienne (1) selon la revendication 3,
dans lequel la partie d'établissement de valeur limite (124) est configurée pour augmenter la valeur limite proportionnellement à l'angle entre la direction du vent et l'orientation de la nacelle (12) lorsque l'angle est dans une plage de la valeur de seuil A₁ à la valeur de seuil A₂.

5. Equipement de génération d'énergie éolienne (1) selon l'une quelconque des revendications 1 à 4,
dans lequel la partie d'établissement de valeur limite (124) est configurée pour déterminer la valeur limite sur la base de la vitesse du vent.

6. Equipement de génération d'énergie éolienne (1) selon la revendication 5,
dans lequel la partie d'établissement de valeur limite (124) est configurée pour, si la vitesse du vent est supérieure ou égale à une valeur de seuil U₂ qui est supérieure à une valeur de seuil U₁, établir la valeur limite à une valeur plus proche du côté de mise en drapeau qu'une valeur à l'instant auquel la vitesse du vent est à la valeur de seuil U₁.

7. Equipement de génération d'énergie éolienne (1) selon la revendication 6,
dans lequel la partie d'établissement de valeur limite (124) est configurée pour établir la valeur limite à une valeur plus proche du côté de mise en drapeau avec une augmentation de la vitesse du vent lorsque la vitesse du vent est dans une plage de la valeur de seuil U₁ à la valeur de seuil U₂.

8. Equipement de génération d'énergie éolienne (1) selon la revendication 7,
dans lequel la partie d'établissement de valeur limite (124) est configurée pour augmenter la valeur limite proportionnellement à la vitesse du vent lorsque la vitesse du vent est dans une plage de la valeur de seuil U₁ à la valeur de seuil U₂.

9. Equipement de génération d'énergie éolienne (1) selon l'une quelconque des revendications 1 à 8,
dans lequel la valeur de seuil A₁ est de 30° à 50°.

10. Equipement de génération d'énergie éolienne (1) selon l'une quelconque des revendications 1 à 4,
dans lequel la valeur de seuil A₂ satisfait à une relation A₂(°) ≥ A₁(°) + 5°.

11. Equipement de génération d'énergie éolienne (1) selon l'une quelconque des revendications 1 à 8,
dans lequel la partie d'établissement de valeur limite (124) est configurée pour établir, en tant que valeur limite, un angle de pas à une valeur plus proche du côté de mise en drapeau par rapport à l'angle de pas fin total de Δθ si l'angle entre la direction du vent et l'orientation de la nacelle est à la valeur de seuil A₂, Δθ satisfaisant à une relation 2° ≥ Δθ(°) ≤ 15°.

12. Procédé de commande d'un équipement de génération d'énergie éolienne (1) qui comprend : un rotor (3) comprenant une pale d'éolienne (2) ; une nacelle (12) pour supporter le rotor (3) en rotation ; une partie de commande de lacet (20) configurée pour faire tourner la nacelle (12) ; et une partie de commande de pas (22) configurée pour changer un angle de pas de la pale d'éolienne (2), le procédé comprenant :
une étape de commande de pas pour fournir à la partie de commande de pas une valeur de commande d'angle de pas pour commander la partie de commande de pas (22) ;
une étape de calcul de valeur de demande pour calculer une valeur de demande d'angle de pas sur la base au moins d'une vitesse de rotation du rotor (3) ;
une étape d'établissement de valeur limite pour établir un angle de pas entre un angle de pas fin total et un angle de pas de mise en drapeau total en tant que valeur limite, si au moins un angle entre une direction de vent et une orientation de la nacelle (12) est supérieur ou égal à une valeur de seuil A₁ (où A₁ > 0) ; et
une étape de calcul de valeur de commande pour établir la valeur limite en tant que valeur de commande d'angle de pas si la valeur de demande d'angle de pas est une valeur plus proche de l'angle de pas fin total que ne l'est la valeur limite, et pour établir la valeur de demande d'angle de pas en tant que valeur de commande d'angle de pas si la valeur de demande d'angle de pas est une valeur égale à la valeur limite ou plus proche de l'angle de pas de mise en drapeau total que ne l'est la valeur limite,
dans lequel l'étape d'établissement de valeur limite comprend la détermination de la valeur limite sur la base de l'angle entre la direction du vent et l'orientation de la nacelle (12),
**caractérisé en ce que**
l'étape d'établissement de valeur limite comprend, si l'angle entre la direction du vent et l'orientation de la nacelle (12) est supérieur ou égal à une valeur de seuil A₂ qui est supérieure à la valeur de seuil A₁, l'établissement de la valeur limite à une valeur plus proche d'un côté de mise en drapeau qu'une valeur à l'instant auquel l'angle est à la valeur de seuil A₁.
